(19) Europäisches Patentamt
European Patent Office
Office européen des brevets

(11) Publication number: **0 555 490 A1**

(12) **EUROPEAN PATENT APPLICATION published in accordance with Art. 158(3) EPC**

(21) Application number: **92918518.9**

(51) Int. Cl.[5]: **G02F 1/35**

(22) Date of filing: **28.08.92**

(86) International application number: **PCT/JP92/01095**

(87) International publication number: **WO 93/05439 (18.03.93 93/08)**

(30) Priority: **29.08.91 JP 218902/91**

(43) Date of publication of application: **18.08.93 Bulletin 93/33**

(84) Designated Contracting States: **DE FR GB**

(71) Applicant: **OSAKA GAS COMPANY LIMITED**
**1-2 Hiranomachi 4-chome, Chuo-ku**
**Osaka-shi, Osaka 541(JP)**

(72) Inventor: **FUJIWARA, Masataka**
**1-23-3, Uenoshiba-cho**
**Sakai-shi, Osaka 593(JP)**
Inventor: **YOKOMICHI, Yasunori**
**1-2-30, Matsumushi-dori, Abeno-ku**
**Osaka-shi, Osaka 545(JP)**
Inventor: **ASADA, Tadahiro**
**34-1, Kamigamokitaoji-cho, Kita-ku**
**Kyoto-shi, Kyoto 603(JP)**

(74) Representative: **Patentanwälte Beetz - Timpe - Siegfried - Schmitt-Fumian- Mayr**
**Steinsdorfstrasse 10**
**D-80538 München (DE)**

# (54) FACE-TO-FACE ORIENTED NONLINEAR OPTICAL MATERIAL AND METHOD OR ORIENTATION THEREOF.

(57) An optically transparent material with nonlinear optical characteristics, comprising a highly face-to-face oriented main chain type liquid crystal polymer comprising repeating monomer units represented by the following general formula and having second-order and third-order nonlinear optical susceptibilities, $X^{(2)}$ and $X^{(3)}$: $-(A)_x-(B)_y-$ wherein A represents a residue of 6-hydroxy-2-naphthoic acid of formula (I), B represents a residue of 4-hydroxybenzoic acid of formula (II), x falls within the range of 1-99 mole %; and y falls within the range of 99.1 mole %.

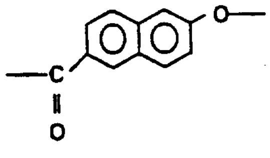
(I)

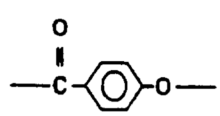
(II)

EP 0 555 490 A1

## TECHNICAL FIELD

The present invention relates to a super-oriented transparent material having a nonlinear optical characteristic as produced by a high-degree plane-plane orientation of a main-chain liquid crystal polymer giving large second-order and third-order nonlinear optical susceptibility (polarizability) coefficients $\chi(^2)$ and $\chi(^3)$, to methods of orientation, and to nonlinear optical devices utilizing said material.

## BACKGROUND ART

In the field of nonlinear optical materials, particularly second-order nonlinear materials, it is reported that compared with the conventional inorganic materials such as KDP ($KH_2PO_4$), LNO ($LiNbO_3$), etc., certain organic materials exhibit by far greater nonlinear optical activity because of the bias in intramolecular electric charge due to nonlocalized conjugate $\pi$ electrons. As organic materials of this sort, single crystals of, for example, 2-methyl-4-nitroaniline, N-(4-nitrophenyl)-(L)-prolinol, methyl-(2,4-dinitrophenyl)-aminopropanoate, N-dimethylamino-5-nitrophenylacetanilide, etc. have been developed. However, these organic materials can hardly be grown into sufficiently large, satisfactory single crystals and, moreover, are unsatisfactory in processability, dynamic stability and heat resistance.

Also known is the technology which comprises dispersing a low molecular weight substance giving a large nonlinear optical response in a polymer matrix or introducing such a low molecular weight substance giving a large nonlinear optical response as the side chain of a main-chain polymer and then subjecting either system to the so-called poling treatment, for example using an external electric field, to orient the nonlinear optically active component and thereby provide a highly processable material. However, it has become clear of late that in materials of this type, the orientation introduced by poling undergoes relaxation with time so that the materials are not stable enough for use in optical devices.

Furthermore, any system comprising a dispersion of a low molecular weight substance giving a large nonlinear optical response in a polymer matrix has the drawback that the nonlinear low molecular weight material coagulates in the poling process. The polymer having a nonlinear optical substance as a side chain unit cannot be sufficiently oriented by poling unless it contains a third component showing a low glass transition temperature and this requirement makes it difficult to inhibit the aging or relaxation of orientation.

## DISCLOSURE OF INVENTION

The object of the present invention is to overcome the above-mentioned drawbacks of the hitherto-known organic nonlinear optical materials and accordingly provide a nonlinear optical material improved in the parameters of importance to optical devices, such as processability, dynamic stability, chemical stability and optical stability.

In view of the foregoing state of the art, the inventor of the present invention did much research and, as a consequence, discovered that the above object is accomplished by a material obtainable by a plane-plane orientation of a main-chain liquid crystal polymer having a defined structure using a defined method.

The present invention, thus, provides a super-oriented transparent material having a nonlinear optical characteristic as produced by a high-degree plane-plane orientation of the molecular chain of the following main-chain liquid crystal polymer, methods of orientation, and nonlinear optical devices utilizing said material, viz:

1. An optically transparent material having a nonlinear optical characteristic as produced by a high-degree plane-plane orientation of a main-chain liquid crystal polymer consisting in a recurring unit of the following formula and having second-order and third-order nonlinear optical susceptibility coefficients $\chi(^2)$ and $\chi(^3)$:

$-(A)_x-(B)_y-$

(wherein A represents a 6-hydroxy-2-naphthoic acid residue

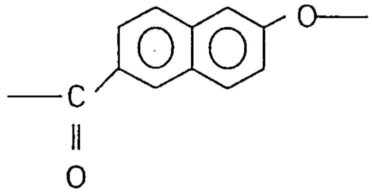

;

B represents a 4-hydroxybenzoic acid residue

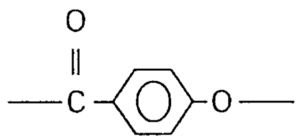

;

x is within the range of 1 to 99 mole %; y is within the range of 99 to 1 mole %).

2. An optically transparent material according to 1 wherein x is within the range of 10 to 80 mole % and y is within the range of 90 to 20 mole %.

3. An optically transparent material according to 2 wherein x is within the range of 20 to 70 mole % and y is within the range of 80 to 30 mole %.

4. An optically transparent material according to 1 which is produced by melt extrusion-calendering.

5. An optically transparent material according to 1 which is produced by application of an external magnetic field.

6. An optically transparent material according to 1 which is produced by application of an external magnetic field-electric field.

7. An optically transparent material according to 1 which is produced by zone melting.

8. An optically transparent material according to 1 which is produced by melt extrusion-calendering and subsequent application of an external electric field.

9. An optical fiber having a core or cladding comprising the optically transparent material according to 1.

10. An optical switch including a nonlinear optical part comprising the optically transparent material according to 1.

11. A light modulator including a nonlinear optical part comprising the optically transparent material according to 1.

12. An optical fiber having a core or cladding comprising the optically transparent material according to 1 which has been oriented in a high degree by melt extrusion-calendering.

13. An optical switch including a nonlinear optical part comprising the optically transparent material according to 1 which has been oriented plane-plane in a high degree by melt extrusion-calendering.

14. A light modulator including a nonlinear optical part comprising the optically transparent material according to 1 which has been oriented plane-plane in a high degree by melt extrusion-calendering.

15. An optical fiber having a core or cladding comprising the optically transparent material according to 1 which has been oriented plane-plane in a high degree by application of an external magnetic field.

16. An optical switch including a nonlinear optical part comprising the optically transparent material according to 1 which has been oriented plane-plane in a high degree by application of an external magnetic field.

17. A light modulator including a nonlinear optical part comprising the optically transparent material according to 1 which has been oriented plane-plane in a high degree by application of an external magnetic field.

18. An optical fiber having a core or cladding comprising the optically transparent material according to 1 which has been oriented plane-plane in a high degree by application of an external magnetic field-electric field.

19. An optical switch including a nonlinear optical part comprising the optically transparent material according to 1 which has been oriented plane-plane in a high degree by application of an external magnetic field-electric field.

20. A light modulator including a nonlinear optical part comprising the optically transparent material according to 1 which has been oriented plane-plane in a high degree by application of an external magnetic field-electric field.
21. An optical fiber having a core or cladding comprising the optically transparent material according to 1 which has been oriented plane-plane in a high degree by zone melting.
22. An optical switch including a nonlinear optical part comprising the optically transparent material according to 1 which has been oriented plane-plane in a high degree by zone melting.
23. A light modulator including a nonlinear optical part comprising the optically transparent material according to 1 which has been oriented plane-plane in a high degree by zone melting.
24. An optical fiber having a core or cladding comprising the optically transparent material according to 1 which has been oriented plane-plane in a high degree by application of an external magnetic field.
25. An optical switch including a nonlinear optical part comprising the optically transparent material according to 1 which has been oriented plane-plane in a high degree by application of an external magnetic field.
26. A light modulator including a nonlinear optical part comprising the optically transparent material according to 1 which has been oriented plane-plane in high degree by application of an external magnetic field.
27. An optical fiber having a core or cladding comprising the optically transparent material according to 1 which has been oriented plane-plane in a high degree by application of an external electric field.
28. An optical switch including a nonlinear optical part comprising the optically transparent material according to 1 which has been oriented plane-plane in a high degree by application of an external electric field.
29. A light modulator including a nonlinear optical part comprising the optically transparent material according to 1 which has been produced by melt extrusion-calendering and subsequent application of an external electric field.

The "main-chain liquid crystal polymer" is a polymer having a mesogenic (liquid-crystal forming) group in the backbone chain and capable of assuming the form of a liquid crystal in a given temperature range or in a given concentration range (in the case of lyotropic liquid crystals). Liquid crystallinity is a state of matter which has the molecular order but lacks the positional order, three-, two- or one-dimensional, of the centers of gravity and is known as the fourth state of matter which does not correspond to any of the usual three distinct states of aggregation. Liquid crystals are dynamically flowable as are liquids and are anisotropic as are crystals. In this mesomorphic state, molecules assume elongated rod-shaped or plate-like asymmetric configurations. Therefore, it is expected that liquid crystal polymers will inherently show more or less second-order nonlinear optical responses. Crystals which are orderly aggregates of molecules do not generally have centers of symmetry and, as such, also show second-order nonlinear optical responses. Thus, a main-chain liquid crystal polymer containing such a liquid crystal molecule introduced as a constituent of its backbone chain has the structural feature (mesogenic group) corresponding to the liquid crystal molecule and accordingly exhibits a second-order nonlinear optical characteristic.

In accordance with the present invention, a main-chain liquid crystal polymer consisting in a recurring monomer unit of the following general formula (1) and having second-order and third-order nonlinear optical susceptibility coefficients $\chi^{(2)}$ and $\chi^{(3)}$ is treated by various alternative processes to provide highly plane-plane oriented optically transparent material exhibiting a nonlinear optical characteristic.

$-(A)_x-(B)_y-$ (1)

Referring to formula (1), A represents a 6-hydroxy-2-naphthoic acid residue

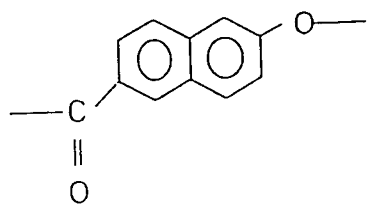 ;

B represents a 4-hydroxybenzoic acid residue

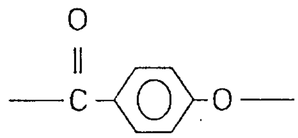

;

the ratio of x to y (mole % ratio) is generally x:y = 1 ~99:99~1, preferably x:y = 10~80:90~20 and most desirably x:y = 20~70:80~30.

The main-chain polymer of the above formula (1) can be produced by mixing 6-acetyl-2-naphthoic acid with 4-acetylbenzoic acid, in a predetermined molar ratio, with stirring in an inert gas. This reaction is carried out by increasing the temperature of the system rapidly to 150 °C and, then, gradually to 300 °C over a period of a few hours and stirring the system in vacuo at that temperature for a further few hours. The resulting main-chain liquid crystal polymer has been verified by the X-ray powder method to have a relative second-order nonlinear optical intensity value which is at least equal to, or higher than, that of MNA (2-methyl-4-nitroaniline) even prior to orientation treatment.

Further research by the present inventor revealed that when the main-chain liquid crystal polymer of the above formula (1) is treated to effect plane-plane orientation, Hermann's orientation function which is an index of the degree of orientation is improved from about 0.95 for the monoaxially oriented film to about 0.98, with the result that the transparency is improved and the nonlinear optical susceptibility is also increased two-fold or more. The present invention has been accomplished on the basis of the above findings.

As the methods for orienting the main-chain liquid crystal polymer of the above formula (1), there can be mentioned melt extrusion-calendering, zone melting, application of an external magnetic field-electric field, application of an external magnetic field, and melt extrusion-calendering and subsequent application of an external electric field. The details of the respective methods will be described hereinafter.

In this specification, the term "plane-plane orientation" is used in the notation system in which the reference axes generally used for expressing the mode and degree of orientation of molecules or crystals are used not only with reference to coordinate axes but also with reference to planes represented by such axes. In this notation system, assuming that the reference coordinate axes are in an (orthogonal) right-hand system, the oriented state of molecules or crystals is expressed in the geometric relationship of Z-axis (or X- or Y-axis) and X-Z plane or molecular plane (or X-Y plane or Y-Z plane) with molecular axis (or crystal face) (Fig. 1). The term "molecular plane" means, in the case of rectangular (rod)-shaped molecules such as mesomorphic crystals, the plane of the rectangle, that is to say the plane of the aromatic ring (e.g. the plane of a benzene ring) in the view yielding the most flat image of the aromatic ring. Moreover, the term "molecular axis" means the long axis of the molecular chain. On the other hand, in the case of polyethylene and other molecules which do not include an aromatic ring, the plane yielding a planar zig-zag view of the carbon atoms is regarded as the molecular plane.

Since the subject matter of the present invention is an oriented main-chain liquid crystal polymer, its mode of orientation is expressed taking the plane of aromatic rings as the molecular plane and the long axis of the series of aromatic rings as the molecular axis. Thus, as schematically illustrated in Fig. 1, the molecular plane lies in parallel with the film plane (X-Z) and the molecular chain axis lies in parallel with the stretching direction (Z axis). Therefore, the plane-plane oriented material according to the present invention is not only oriented in parallel with Z-axis but presents order in the sectional direction normal to the above direction of orientation (This mode of orientation is referred to as double-orientation).

In the aspect that it presents such a double-oriented state or plane-plane oriented state, the material of the present invention should be clearly distinguished from the liquid crystal polymer having a nonlinear optical characteristic which has been mono-axially oriented in the direction normal to the plane of the substrate as disclosed in JP Kokai S-61-69039. Moreover, in the known film material produced by introducing a low molecular weight substance having a large nonlinear optical response as a side chain to the backbone polymer chain and subjecting the system to a poling treatment, for example using an external electric field, to orient the non-linear optical component, too, the nonlinear optical substance is oriented in the direction normal to the substrate and the state of orientation is quite different from that obtainable by the plane-plane orientation according to the invention.

A typical example of the plane orientation found in a known material is shown as a reference in Fig. 2. Here, the cyanobiphenyl moiety is plane-oriented in parallel with X-Z plane and the molecular axis is parallel to Z-axis.

The following methods can be used for achieving a controlled plane-plane orientation in the main-chain liquid crystal polymer of the present invention.

(1) Melt extrusion-calendering

This is not a mere stretching of a polymer after film formation but is a method which comprises applying a draft to an extrudate in the course of molding (at film formation), that is to say drawing the extrudate at a speed higher than the extrusion speed.

A schematic view of a typical equipment for use in practicing this method is presented in Fig. 3. A main-chain polymer 1 is extruded from a T-die 3 and the resulting film 5 is calendered by means of an upper roller and a lower roller 7,9. This calendering achieves the desired plane-plane orientation. Assuming that the speed at which the film passes through the nip between the rollers 7,9 is $V_f$ and the extrusion speed of the film 5 is $V_o$, it is preferable that $V_f/V_o$ is about 120 to 150. Preferably the temperature $T_f$ of the rollers 7,9 is about 20 to 25 °C lower than the melt-extrusion temperature $T_m$ or close to the phase transistion temperature $T_{KN}$ between the crystalline state and nematic state of the liquid crystal polymer. The pressure between the rollers 7,9 is preferably about 100 to 150 kg/cm$^2$. The calendered film 11 is then taken up by a takeup drum 13.

The second-order linear optical intensity value $\chi(^2)$ of the plane-plane oriented film thus obtained is, for example, at least 460 x $10^{-9}$ esu. The nonlinear optical coefficient can be determined by the Maker-Fringe method with reference to J. Jerphagnon S. K. Kurts, J. Appl. Phys., 41, 1667, 1970. A typical example of the equipment for use in the determination of the second-order nonlinear optical intensity value $\chi(^2)$ of the plane-plane oriented film is shown in Fig. 4. The whole setup is controlled by a personal computer and the SHG intensity (second harmonic generating intensity) is measured as a function of the angle of incidence. In this case, the provisional Hermann's orientation function thus obtained is about 0.97. The third-order nonlinear optical characteristic of the obtained film as determined by the third harmonic generation method described in Kotai Butsuri (Solid-state Physics) vol. 24, No. 11,903 (1989) showed that the film had a third-order nonlinear optical characteristic. By the same technique, the plane-plane oriented materials respectively obtained by the following methods were also found to have a third-order nonlinear optical characteristic.

(2) Zone melting

A schematic view of a typical equipment for use in practicing the zone melting method is presented in Fig. 5.

In this setup, a film specimen is sandwiched between two glass plates D and these glass plates D are further flanked by steel members A, A each having an edge-shaped portion as disposed in a high-temperature zone and the edge-shaped portions are maintained at a predetermined temperature ($T_M$). A low-temperature zone B which lies below the edge-shaped portions is also maintained at a predetermined temperature ($T_o$). The gap between the steel members A, A and the low-temperature zone B is adjustable but is preferably about 1.5 mm for general practical purposes. The glass plates D are displaceable downward at a predetermined rate.

(2-a) Zone melting _ A

The temperature of the steel members A, A in the high-temperature zone is set to a neighborhood of said phase transition temperature $T_{KN}$ and the temperature of the low-temperature zone B is set 20 °C lower than $T_{KN}$.The descending speed of glass plates D sandwiching the sample are preferably set at about 5-6 mm/hr.

When the plane-plane oriented film produced by the above method (2) is subjected to this treatment, the clarity of the film is improved and the SHG generation is enhanced by not less than 20%. In accordance with this method, the degree of orientation is thermally improved without alteration of the oriented state of the film specimen.

(2-b) Zone melting _ B

The temperature of the steel members A, A in the high-temperature zone is set 30° higher than said phase transition temperature $T_{KN}$ and the temperature of the low-temperature zone B is set 20 °C lower than $T_{KN}$. The descending speed of glass plates D sandwiching the film specimen is preferably set at about 1

mm/hr. The specimen is melted as it is heated by the edges of steel members A, A in the high-temperature zone. By the temperature gradient defined by A and B, the crystallization in a given direction of orientation is promoted so that the orientation and crystallization proceed continuously to convert the whole specimen into a dense crystalline artifact. The film manufactured by this method had the highest degree of transparency and its provisional Hermann's orientation function was 0.98.

(3) External magnetic field method

This method can be practiced using an equipment of the type shown in Fig. 6 (side elevation view) and Fig. 7 (plan view). As mentioned in Kobunshi Ronbun Shu (a collection of papers on polymers), Vol. 43, No. 4,213-222 (Apr., 1986), orientation by means of an external magnetic field has been proven to be the most effective, of all the methods inclusive of ultra-stretching, external electric field orientation, etc., for accomplishing a controlled orientation of liquid crystal polymers.

As shown in Figs. 6 and 7, a film specimen is placed on a glass plate 1 cm x 1 cm x 1 mm and heated at a temperature 20 °C higher than $T_{KN}$. The film specimen can be prepared by melt-forming the polymer alone or by dissolving the polymer in a suitable solvent and heating the solution to remove the solvent. As an example, such a film could be treated with a magnetic field of 10 K gauss for 48 hours to provide a plane-plane oriented film. In this process, application of the magnetic field is continued even after completion of heating until the temperature of the specimen has decreased to room temperature. Moreover, heated nitrogen gas is constantly introduced into the heating zone and aspirated off together with the evolved gas. By this method, there is obtained a highly transparent film with a Hermann's orientation function of 0.97.

(4) External magnetic field-electric field method

This method can be practiced using the equipment illustrated in Figs. 8 and 9. In this method, an electric field normal to the magnetic field is applied to the magnetic orientation apparatus mentioned for the external magnetic field application method (3) so as to further align the polar groups in the molecular chain oriented plane-plane by the external magnetic field. As to the degree of control of orientation, this method provides improvements in the degree of orientation as well as in nonlinear optical characteristic as compared with the external magnetic field method or the external electric field method. For example, as shown in Fig. 8, a film specimen is sandwiched between copper plates, each 1 cm x 1 cm x 1 mm, and mica sheets are disposed externally of the copper plates. In this arrangement, the specimen is heated at a temperature 30 °C higher than $T_{KN}$. The film specimen can be prepared by melt-molding the polymer alone or by dissolving the polymer in a suitable solvent and heating the solution to remove the solvent. The film is maintained in a magnetic field of not less than 10 K gauss for 24 hours and, then, a magnetic field of not less than 10 K gauss and an electric (DC) voltage of not less than 25 KV/cm are applied at the same temperature for 0.5 to 1 hour to provide a plane-plane oriented film. In this connection, application of the magnetic field and electric field is continued even after completion of heating until the specimen has cooled to room temperature. During the process, heated nitrogen gas is constantly introduced into the heating zone, and in the case of the solvent evaporation method, the solvent is aspirated off together with the evolved gas. By this method, there is obtained a highly transparent film with a Hermann's orientation coefficient of 0.98.

(5) Melt extrusion-calendering and subsequent application of an external electric field

In this method, in order to align the polar groups in the film oriented plane-plane by the melt excursion-calendering method (1), the film can be treated with an electric field using the equipment illustrated in Fig. 10. In this method, the film (film-shaped specimen) oriented plane-plane by melt extrusion-calendering (1) is sandwiched between a couple of copper plates and heated through mica sheets at a temperature of $T_{KN}$ ± 2 °C. In this connection, the application of an electric field is continued even after completion of heating until the temperature of the specimen has dropped to room temperature. This method provides a highly transparent film giving a provisional Hermann's orientation function of 0.98.

Optical devices fabricated using the highly plane-plane oriented main-chain liquid crystal polymer thus obtained can be used as active elements for second harmonic generation, third harmonic generation, light intensity modulation, light amplification, light bistabilization, light plase modulation, etc. and such active elements can be broadly utilized in such application fields as light information processing, optical communication, optoelectronics, wavelength modulation, optical memory, light modulation and so on.

Fig. 11 is a schematic view showing a slab-type lightguide utilizing Cherenkov radiation as an exemplary light converting device. In this device, a substrate 21 comprising a material having a nonlinear optical characteristic (for example, $LiNbO_3$ or the main-chain liquid crystal polymer of the invention) is used in combination with a lightguide 23 comprising a highly plane-plane oriented main-chain liquid crystal polymer of the invention. The incident radiation 25 is wavelength-modulated by the lightguide 23 to yield a second harmonic radiation 27.

As another example of light converting device, a schematic view showing a reflection mode optical fiber wavelenth-modulating device is presented in Fig. 12. In this device, a highly refractive material such as a high-index glass or a high-index transparent polymer is preformed into an axon or band form and used as the core 31 and the highly plane-plane oriented transparent main-chain liquid crystal polymer having a high nonlinear optical characteristic according to the invention is used as the cladding 33. In this device, the incident light propagating within the core 31 having a refractive index of $n_1$ is repeatedly reflected by the interfacial wall of the cladding layer 33 having a refractive index of $n_2$ and the efficiency of wavelength modulation is progressively increased in the course.

As still another example of light converting device, a schematic view of a transmission mode optical fiber wavelength-modulating device is presented in Fig. 13. In this device, the highly plane-plane oriented transparent main-chain liquid crystal polymer having a high nonlinear optical characteristic according to the invention is used as the core material 35 and a low-index polymer is used as the cladding material 37. In this device, the light propagating in the core 35 with a refractive index of $n_1$ undergoes repeated reflection at the interface with the cladding layer 37 with a refractive index of $n_2$ so that wavelength modulation takes place in the course of propagation.

As an exemplary optical switch utilizing the highly plane-plane oriented transparent main-chain liquid crystal polymer having a high nonliner optical characteristic according to the invention, a nonlinear directional coupler is schematically shown in Fig. 13.

Further, an exemplary Mach-Zehnder optical switch utilizing the highly plane-plane oriented transparent main-chain liquid crystal polymer having a high nonliner optical characteristic according to the present invention is schematically illustrated in Fig. 14.

## EFFECT OF INVENTION

The highly plane-plane oriented main-chain liquid crystal polymer of the present invention has a high nonlinear optical characteristic as well as high transparency.

Moreover, the highly plane-plane oriented main-chain liquid crystal polymer of the present invention is free from the relaxation of orientation and consequent loss of the nonlinear optical response which are inevitable in the conventional side-chain type liquid crystal polymer subjected to a high electric field poling treatment and is a material very satisfactory in mechanical properties, heat resistance and chemical stability.

Therefore, the present invention finds application in a broad variety of uses such as light information processing, light communications, optoelectronics, wavelength modulation, optical memory, light modulation and so on.

## EXAMPLES

The following reference and working examples are intended to point out the features of the present invention with further clarity.

### Reference Example 1

Using 6-hydroxy-2-naphthoic acid (hereinafter referred to as HNA) and 4-hydroxybenzoic acid (hereinafter referred to as HBA), polymers with HNA-HBA mole ratios of 60:40, 40:60, 30:70, 25:75 and 23:77 were synthesized. The average degrees of polymerization of these polymers ranged from about 100 to about 300. After each of these polymers was adjusted to a particle diameter of 100 - 154 μm, its SHG (intensity of second harmonic generation) was determined by the powder method described in S.K. Kurts and T.T. Perry, J. Appl. Phys. 39, 3798 (1968) using the apparatus illustrated in Fig. 4. The results are shown in Table 1.

Table 1

| Main-chain liquid crystal polymer HNA/HBA | Relative intensity of SHG |
|---|---|
| 60/40 | 1.3 |
| 40/60 | 1.4 |
| 30/70 | 1.3 |
| 25/75 | 1.0 |
| 23/77 | 1.0 |
| Note: The relative value with the second-order nonlinear optical intensity of 2-methyl-4-nitroaniline of the same particle diameter being taken as unity. | |

Reference Example 2

Polymers with HNA/HBA mole ratios of 40:60, 30:70 and 25:75 were synthesized. The average degrees of polymerization of these polymers ranged from about 100 to about 300. Each of these polymers was melt-extruded at 310°C, 300°C or 290°C and $V_f/V_o$ = 150 and the extrudate was taken up without drafting to provide a monoaxially oriented film.

The second-order nonlinear optical intensity value $\chi^{(2)}$ of the resulting monoaxially oriented film, as determined with the apparatus shown in Fig. 4, was 240 x $10^{-9}$ esu. The provisional Hermann's orientation function of the film was 0.95. In this device, the following components were used. The whole apparatus could be controlled with a personal computer and the intensity of SHG was measured as the function of the angle of incidence.

Light source: Nd-YAG laser, manufactured by Spectron (U.K.)

Polarizer: Glam-Thompson type

Testpiece stand: a rotary stage with a controller attachment, manufactured by Aerotec Incorporated.

Monochromater: Grate spectrometer, manufactured by Japan Spectroscopic Co., Ltd.

Photomultiplier: Head type photomultiplier, manufactured by Hamamatsu Photonics.

Example 1

A polymer with a HNA/HBA mole ratio of 30:70 was synthesized. Using the apparatus shown in Fig. 3, the polymer was melt-extruded at $V_f/V_o$ = 150 and calendered by means of two rolls at a nip pressure of 150 kg/$cm^2$ and taken up under a draft to provide a plane-plane oriented film. The calender roll temperature was 280°C and the melt-extrusion temperature was 300°C. Thus, the temperature of the former was close to the phase transition temperature $T_{KN}$ (280°C) between the crystalline and nematic states of the liquid crystal. The ratio of the velocity $V_f$ of the film passed between the rollers and the velocity $V_o$ of extrusion was $V_f/V_o$ = 150.

The second-order nonlinear optical intensity value $\chi^{(2)}$ of the resulting plane-plane oriented film, as determined with the apparatus shown in Fig. 4, was 460 x $10^{-9}$ esu.

Example 2

A polymer with a HNA/HBA mole ratio of 30:70 was synthesized. Using the apparatus shown in Figs. 6 and 7, a film specimen of the polymer was set on the glass plate, 1 cm x 1 cm x 1 mm, and heated at a temperature 20°C higher than $T_{KN}$ (280°C) while a magnetic field of 10 K gauss was applied for 48 hours to provide a plane-plane oriented film. The film specimen can be prepared by dissolving the polymer in a suitable solvent and casting the solution on the glass plate so that the solvent is evaporated on heating to leave the desired film. In this process, heated nitrogen gas was constantly introduced into the heating zone and, in the case of the above solvent evaporation method, the evolved gas was consistently aspirated off.

By the above method, a highly transparent film with a provisional Hermann's orientation function of 0.97 was obtained.

The nonlinear optical intensity value $\chi^{(2)}$ of this film, as determined with the apparatus shown in Fig. 4, was 600 x $10^{-9}$ esu.

Example 3

A polymer with a HNA/HBA mole ratio of 30:70 was synthesized. Using the apparatus shown in Figs. 6 and 7, a solution of the polymer in pentafluorophenol was cast on a glass plate 1 cm x 1 cm x 1 mm and heated at a temperature 20 °C higher than $T_{KN}$ (280 °C) while a magnetic field of 10 K gauss was applied for 48 hours to provide a plane-plane oriented film. In this process, heated nitrogen gas was introduced into the heating zone and the evolved gas was constantly aspirated off.

By this method, a highly transparent film with a provisional Hermann's orientation function of 0.97 was obtained.

The nonlinear optical intensity value $\chi^{(2)}$ of this plane-plane oriented film, as determined with the apparatus shown in Fig. 4, was 600 x $10^{-9}$ esu.

Example 4

A polymer with a HNA/HBA mole ratio of 30:70 was synthesized and a plane-plane oriented film was prepared as in Example 1. This plane-plane oriented film was sandwiched between two glass sheets (20 µm) and set in the high-temperature zone A,A of the zone melting equipment shown in Fig. 5. The temperature of the high-temperature zone A,A was close to $T_{KN}$ (280 °C), the distance between A and B was 1.5 mm, and the temperature of the low-temperature zone was 260 °C, i.e. 20 °C lower than $T_{KN}$. The descending speed of the specimen was 6 mm/hour.

Compared with the plane-plane oriented film obtained in Example 1, the above film had been improved in transparency and by more than 20% in SHG intensity. The nonlinear optical intensity value $\chi^{(2)}$ of this plane-plane oriented film, as determined with the apparatus shown in Fig. 4, was 560 x $10^{-9}$ esu.

Example 5

A polymer with a HNA/HBA mole ratio of 30:70 was synthesized and a plane-plane oriented film was prepared in the same manner as Example 1. This plane-plane oriented film was sandwiched between two glass sheets (20 µm) and set in the high-temperature zone A,A of the zone melting equipment shown in Fig. 5. The temperature of the high-temperature zone A,A was 30 °C higher than $T_{KN}$ (280 °C), the distance between A and B was 1.5 mm and the temperature of the low-temperature zone was 260 °C, i.e. 20 °C lower than $T_{KN}$. The descending speed of the specimen was 1 mm/hour. The specimen was melted by heat between the edges of the high-temperature members A,A. In the A-B zone, crystallization in a definite direction was promoted by said temperature gradient and proceeded continuously so that the whole specimen became a dense crystalline entity.

The film prepared in the above manner had the highest transparency and its provisional Hermann's orientation function was 0.98. The nonlinear optical intensity value of this plane-plane oriented film, as determined with the apparatus of Fig. 4, was 600 x $10^{-9}$ esu.

Example 6

A polymer with a HNA/HBA mole ratio of 30:70 was synthesized and a monoaxially oriented film was prepared by melt-extrusion. Then, as shown in Fig. 9, this film specimen was sandwiched between two copper plates, 1 cm x 1 cm x 1 mm, and heated at a temperature 30 °C higher than $T_{KN}$ through mica sheets disposed externally of the copper plates. The film specimen may be prepared by dissolving the polymer in a suitable solvent and evaporating the solvent at heating. The film was maintained in a magnetic field of 10 K gauss for 24 hours, after which an electric field of 25 KV/cm was applied while the magnetic field of 10 Kgauss was retained to provide a plane-plane oriented film. In this process, application of the magnetic field was continued even after completion of heating until the temperature of the specimen had decreased to room temperature. Moreover, heated nitrogen gas was constantly introduced into the heating zone and, in the case of the solvent evaporation method, was aspirated off together with the evolved gas. By the above method, a highly transparent film with a provisional Hermann's orientation function of 0.98 was obtained. The nonlinear optical intensity of this plane-plane oriented film, as determined with the apparatus of Fig. 4, was 600 x $10^{-9}$ esu.

Example 7

A polymer with a HNA/HBA mole ratio of 30:70 was synthesized and melt-extruded into a monoaxially oriented film. Then, as shown in Fig. 11, the film specimen was sandwiched between two copper plates and heated at a temperature of $T_{KN}$±2°C through mica sheets while an electric filed of 25 KV/cm was applied for 5 minutes to provide a plane-plane oriented film. In this process, application of the electric field was continued even after completion of heating until the temperature of the specimen had decreased to room temperature. This method provided a highly transparent film with a provisional Hermann's orientation function of 0.98. The nonlinear optical intensity of this plane-plane oriented film, as determined with the apparatus of Fig. 4, was 600 x $10^{-9}$ esu.

BRIEF DESCRIPTION OF DRAWINGS

Fig. 1 is a schematic perspective view showing the structure of a plane-plane oriented main-chain liquid crystal polymer of the invention wherein the molecular plane lies in parallel with the film plane (X-Z plane) and the molecular chain axis lies in parallel with the stretching direction (Z-axis).

Fig. 2 is a schematic diagram illustrating the plane orientation of cyanobiphenyl in parallel with X-Z axis.

Fig. 3 is a schematic sectional view showing an exemplary melt extrusion-calendering apparatus for use in the invention.

Fig. 4 is a circuit diagram representing an exemplary apparatus for use in the determination of the nonlinear optical characteristic of the plane-plane oriented optical material obtained by the method of the invention.

Fig. 5 is a schematic sectional view showing an exemplary zone melting equipment for use in the invention.

Fig. 6 is a schematic side section view showing the sample holder unit of an exemplary magnetic field orientation system for use in the invention.

Fig. 8 is a schematic plan view showing the sample holder unit of an exemplary magnetic field-electric field orientation system for use in the invention.

Fig. 9 is a schematic side section view showing an exemplary magnetic field-electric field orientation system for use in the invention.

Fig. 10 is a schematic side section view showing an exemplary electric field orientation system for use after melt extrusion in the practice of the invention.

Fig. 11 is a schematic perspective view showing a slab-type lightguide utilizing the plane-plane oriented nonlinear optical material according to the invention.

Fig. 12 is a side section view (a) and a front section view (b) both schematically showing a reflection mode optical fiber utilizing the plane-plane oriented nonlinear optical material of the invention.

Fig. 13 is a side section view (a) and a front section view (b) both schematically showing a transmission mode optical fiber utilizing the plane-plane oriented nonlinear optical material of the invention.

Fig. 14 is a schematic perspective view showing a nonlinear optical directional coupler utilizing the plane-plane oriented nonlinear optical material of the invention.

Fig. 15 is a schematic perspective view showing a Mach-Zehnder optical switch utilizing the plane-plane oriented nonlinear optical material of the invention.

**Claims**

**1.** An optically transparent material having a nonlinear optical characteristic as produced by a high-degree plane-plane orientation of a main-chain liquid crystal polymer consisting in a recurring unit of the following formula and having second-order and third-order nonlinear optical susceptibility coefficients $\chi^{(2)}$ and $\chi^{(3)}$:

$$-(A)_x-(B)_y-$$

(wherein A represents a 6-hydroxy-2-naphthoic acid residue

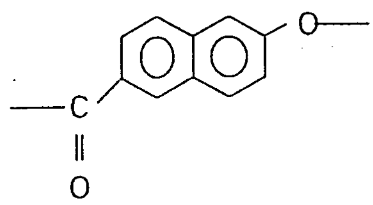

;

B represents a 4-hydroxybenzoic acid residue

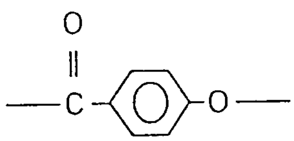

;

x is within the range of 1 to 99 mole %; y is within the range of 99 to 1 mole %).

**2.** An optically transparent material according to claim 1 wherein x is within the range of 10 to 80 mole % and y is within the range of 90 to 20 mole %.

**3.** An optically transparent material according to claim 2 wherein x is within the range of 20 to 70 mole % and y is within the range of 80 to 30 mole %.

**4.** An optically transparent material according to claim 1 which is produced by melt extrusion-calendering.

**5.** An optically transparent material according to claim 1 which is produced by application of an external magnetic field.

**6.** An optically transparent material according to claim 1 which is produced by application of an external magnetic field-electric field.

**7.** An optically transparent material according to claim 1 which is produced by zone melting.

**8.** An optically transparent material according to claim 1 which is produced by melt extrusion-calendering and subsequent application of an external electric field.

**9.** An optical fiber having a core or cladding comprising the optically transparent material according to claim 1.

**10.** An optical switch including a nonlinear optical part comprising the optically transparent material according to claim 1.

**11.** A light modulator including a nonlinear optical part comprising the optically transparent material according to claim 1.

**12.** An optical fiber having a core or cladding comprising the optically transparent material according to claim 1 which has been oriented in a high degree by melt extrusion-calendering.

**13.** An optical switch including a nonlinear optical part comprising the optically transparent material according to claim 1 which has been oriented plane-plane in a high degree by melt extrusion-calendering.

**14.** A light modulator including a nonlinear optical part comprising the optically transparent material according to claim 1 which has been oriented plane-plane in a high degree by melt extrusion-calendering.

**15.** An optical fiber having a core or cladding comprising the optically transparent material according to claim 1 which has been oriented plane-plane in a high degree by application of an external magnetic field.

**16.** An optical switch including a nonlinear optical part comprising the optically transparent material according to claim 1 which has been oriented plane-plane in a high degree by application of an external magnetic field.

**17.** A light modulator including a nonlinear optical part comprising the optically transparent material according to claim 1 which has been oriented plane-plane in a high degree by application of an external magnetic field.

**18.** An optical fiber having a core or cladding comprising the optically transparent material according to claim 1 which has been oriented plane-plane in a high degree by application of an external magnetic field electric field.

**19.** An optical switch including a nonlinear optical part comprising the optically transparent material according to claim 1 which has been oriented plane-plane in a high degree by application of an external magnetic field-electric field.

**20.** A light modulator including a nonlinear optical part comprising the optically transparent material according to claim 1 which has been oriented plane-plane in a high degree by application of an external magnetic field-electric field.

**21.** An optical fiber having a core or cladding comprising the optically transparent material according to claim 1 which has been oriented plane-plane in a high degree by zone melting.

**22.** An optical switch including a nonlinear optical part comprising the optically transparent material according to claim 1 which has been oriented plane-plane in a high degree by zone melting.

**23.** A light modulator including a nonlinear optical part comprising the optically transparent material according to claim 1 which has been oriented plane-plane in a high degree by zone melting.

**24.** An optical fiber having a core or cladding comprising the optically transparent material according to claim 1 which has been oriented plane-plane in a high degree by application of an external magnetic field.

**25.** An optical switch including a nonlinear optical part comprising the optically transparent material according to claim 1 which has been oriented plane-plane in a high degree by application of an external magnetic field.

**26.** A light modulator including a nonlinear optical part comprising the optically transparent material according to claim 1 which has been oriented plane-plane in high degree by application of an external magnetic field.

**27.** An optical fiber having a core or cladding comprising the optically transparent material according to claim 1 which has been oriented plane-plane in a high degree by application of an external electric field.

**28.** An optical switch including a nonlinear optical part comprising the optically transparent material according to claim 1 which has been oriented plane-plane in a high degree by application of an external electric field.

**29.** A light modulator including a nonlinear optical part comprising the optically transparent material according to claim 1 which has been produced by melt extrusion-calendering and subsequent application of an external electric field.

F i g. 1

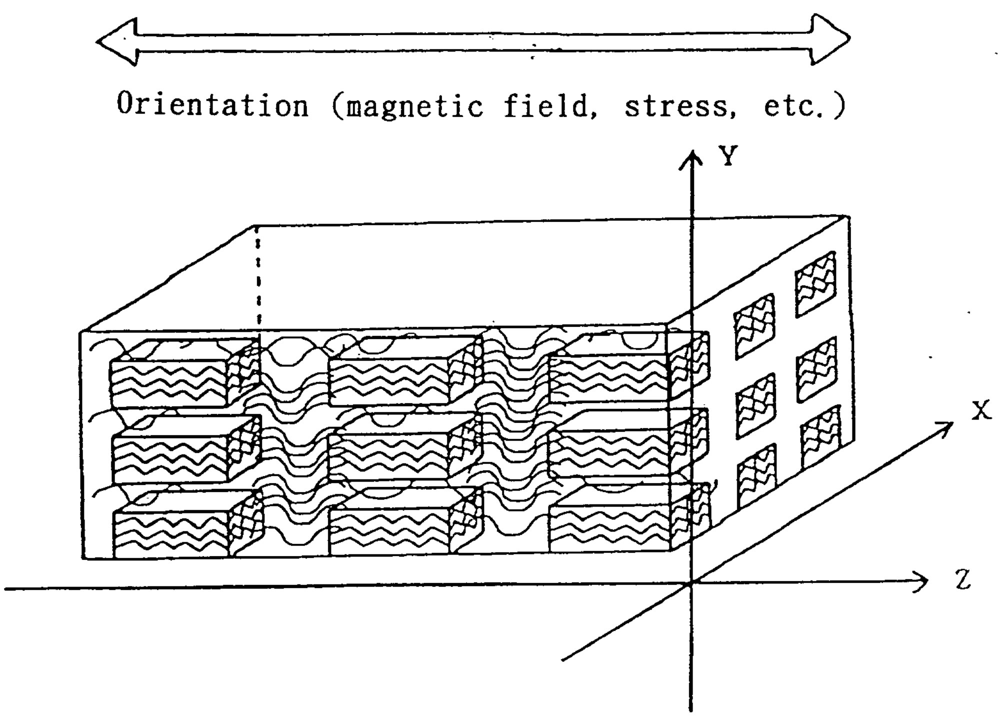

Fig. 2

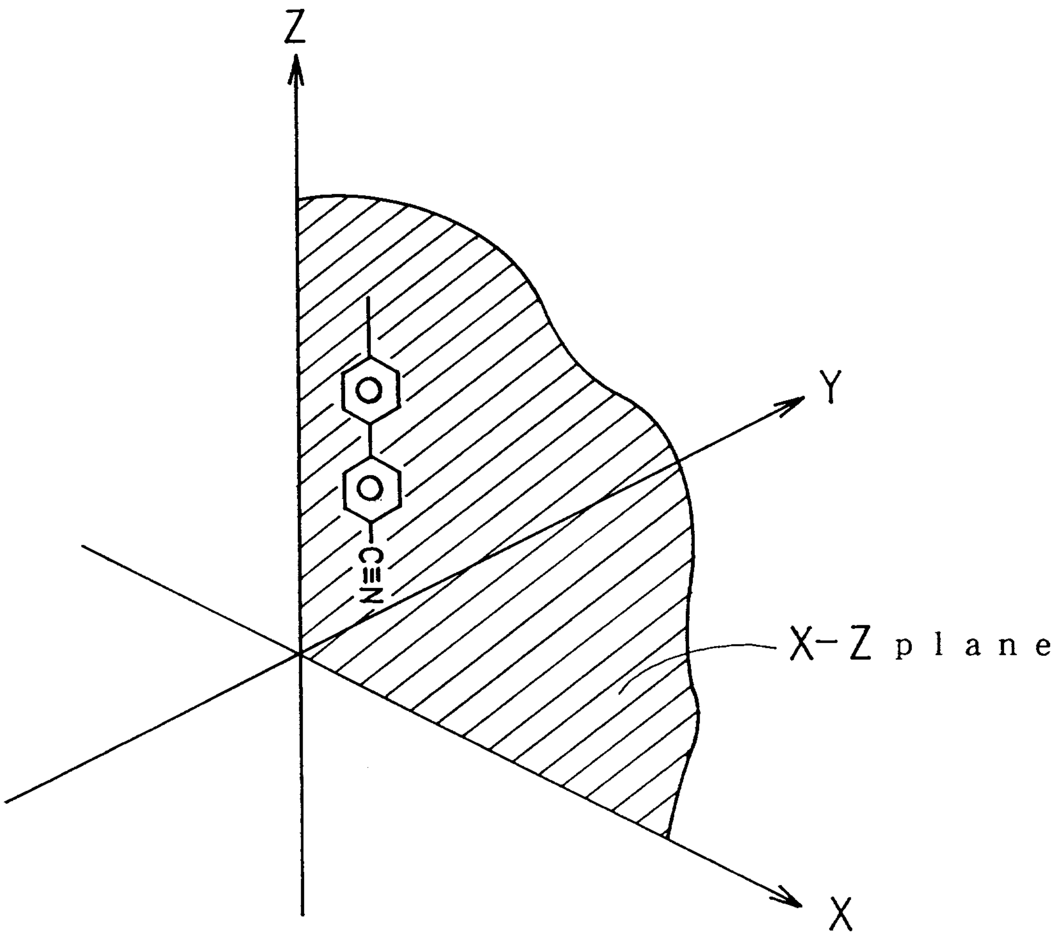

Fig. 3

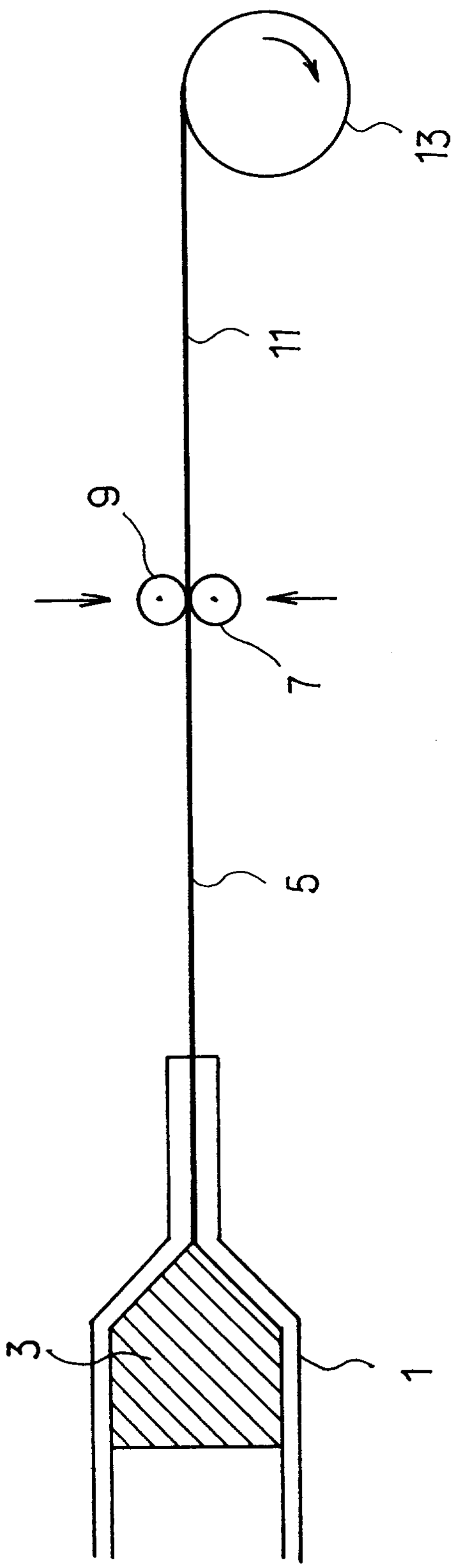

Fig. 4

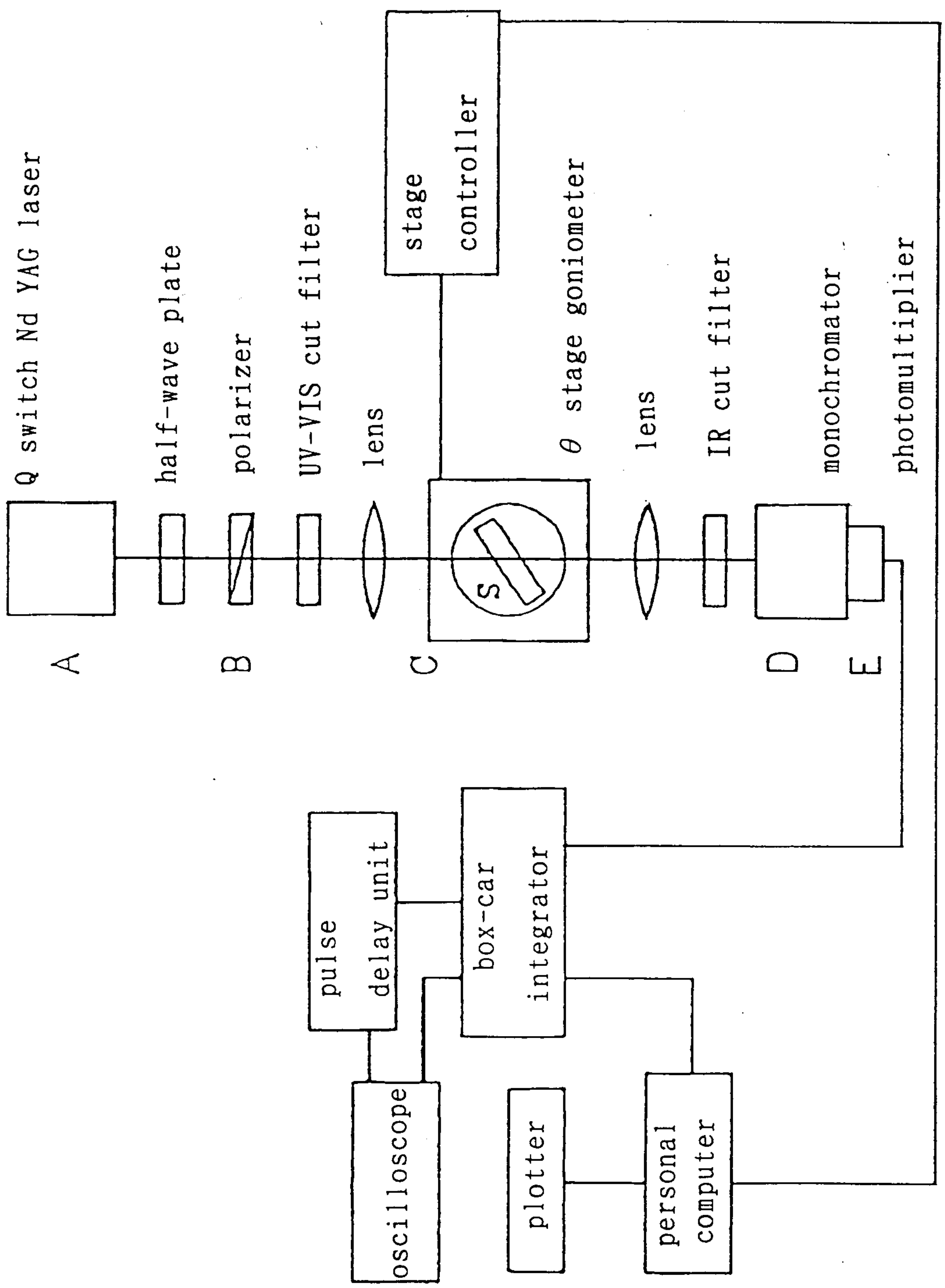
Q switch Nd YAG laser
half-wave plate
polarizer
UV-VIS cut filter
lens
stage controller
θ stage goniometer
lens
IR cut filter
monochromator
photomultiplier
A
B
C
S
D
E
pulse delay unit
box-car integrator
oscilloscope
plotter
personal computer

Fig. 5

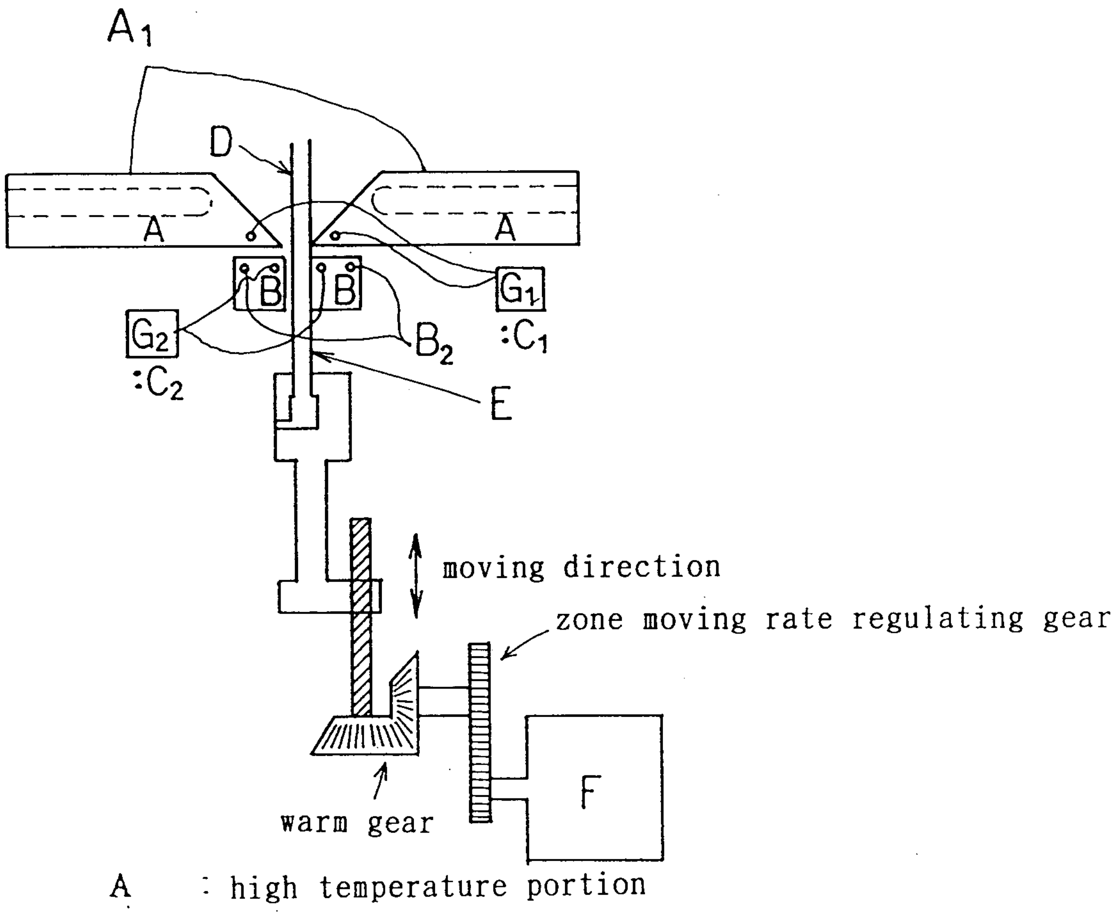


A : high temperature portion

$A_1$ : cartridge heater

B : low temperature portion

$B_2$ : cartridge heater

$C_1$ : thermo couple

$C_2$ : thermo couple

D : glass plate

E : specimen

F : motor

$G_1$ : controller

$G_2$ : controller

Fig. 6

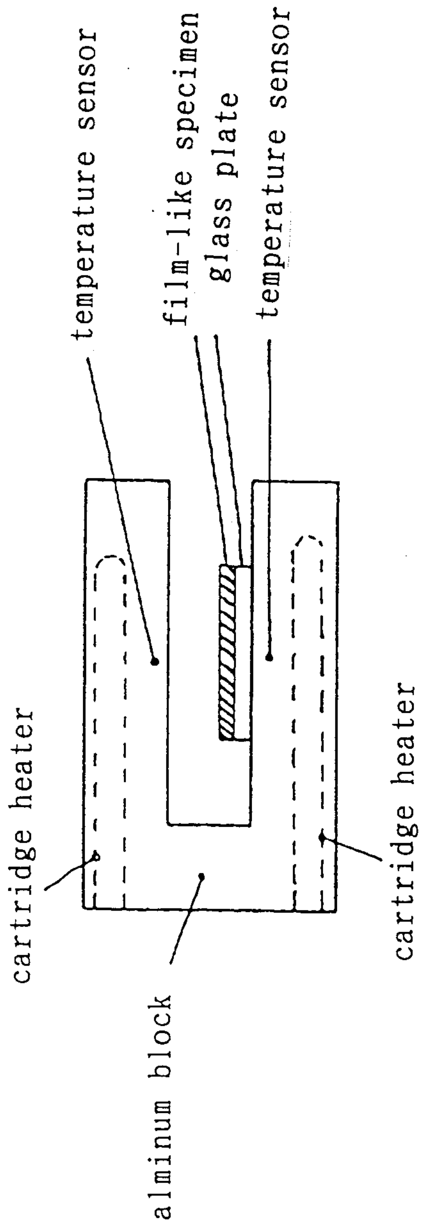
temperature sensor
film-like specimen
glass plate
temperature sensor
cartridge heater
cartridge heater
alminum block

Fig. 7

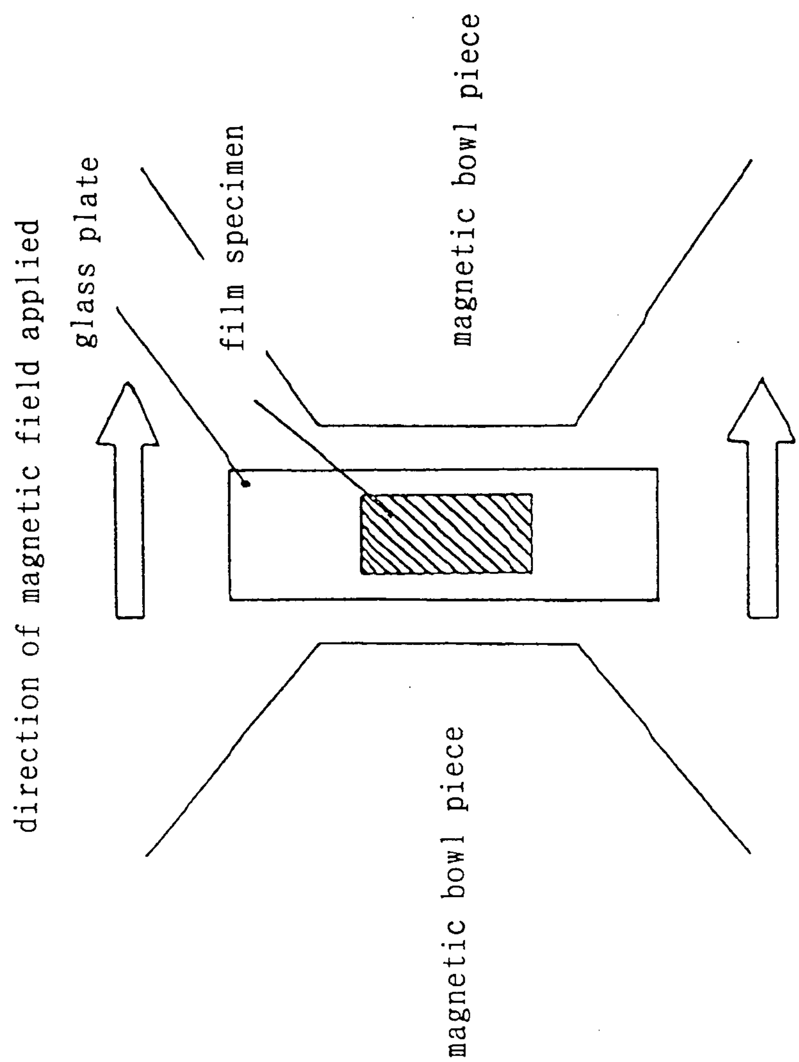
direction of magnetic field applied
glass plate
film specimen
magnetic bowl piece
magnetic bowl piece

Fig. 8

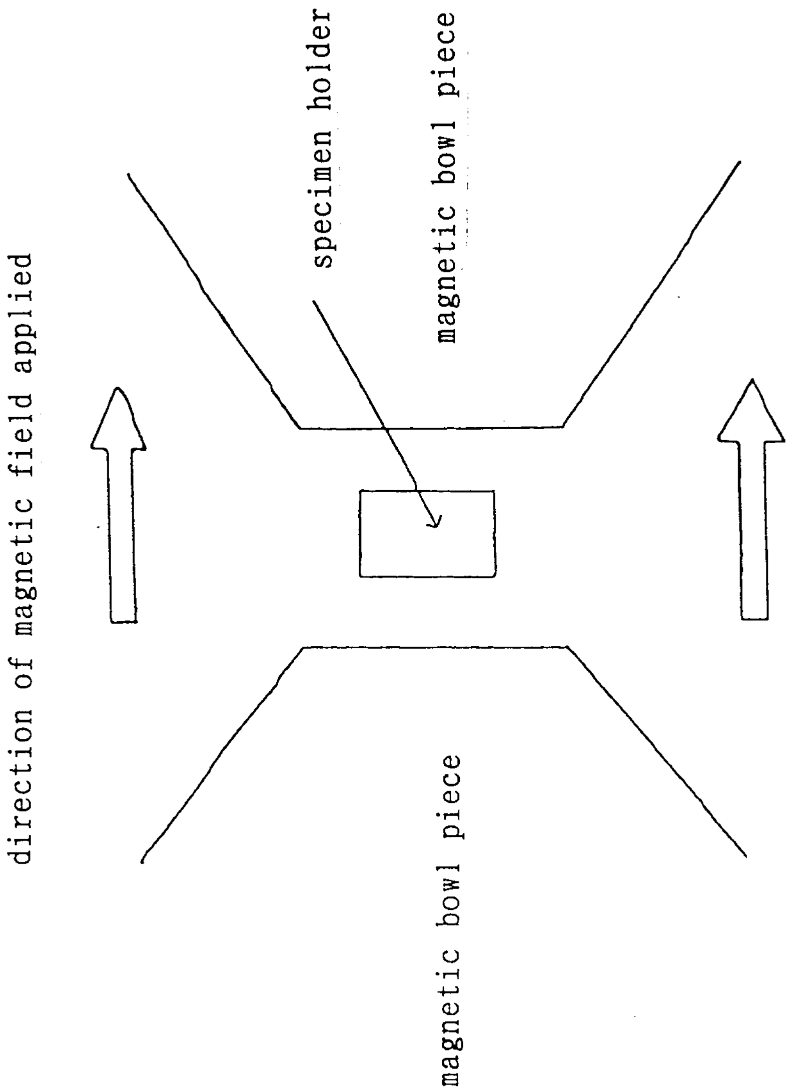
direction of magnetic field applied
specimen holder
magnetic bowl piece
magnetic bowl piece

Fig. 9

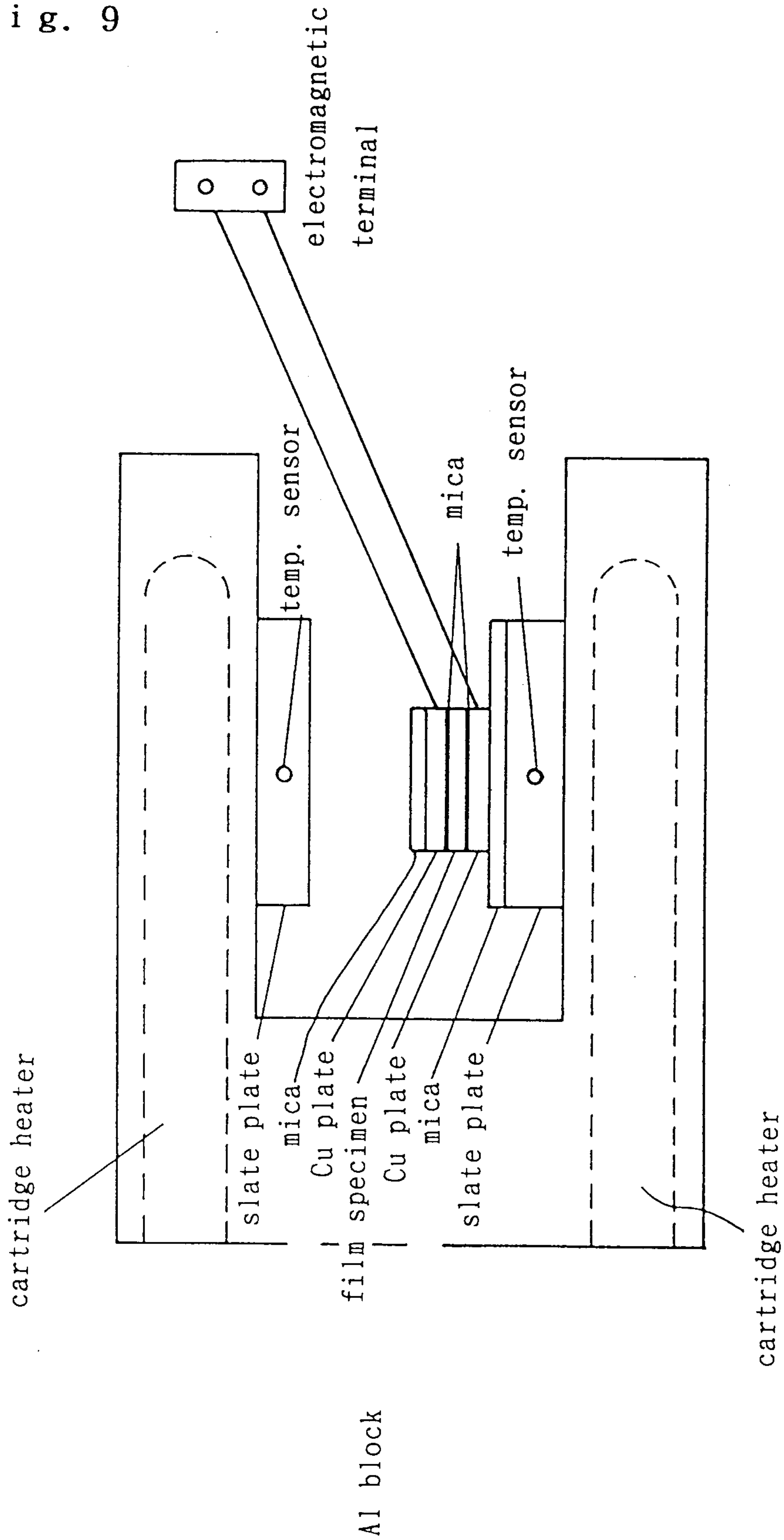
electromagnetic
terminal
temp. sensor
mica
temp. sensor
cartridge heater
slate plate
mica
Cu plate
film specimen
Cu plate
mica
slate plate
cartridge heater
Al block

Fig. 10

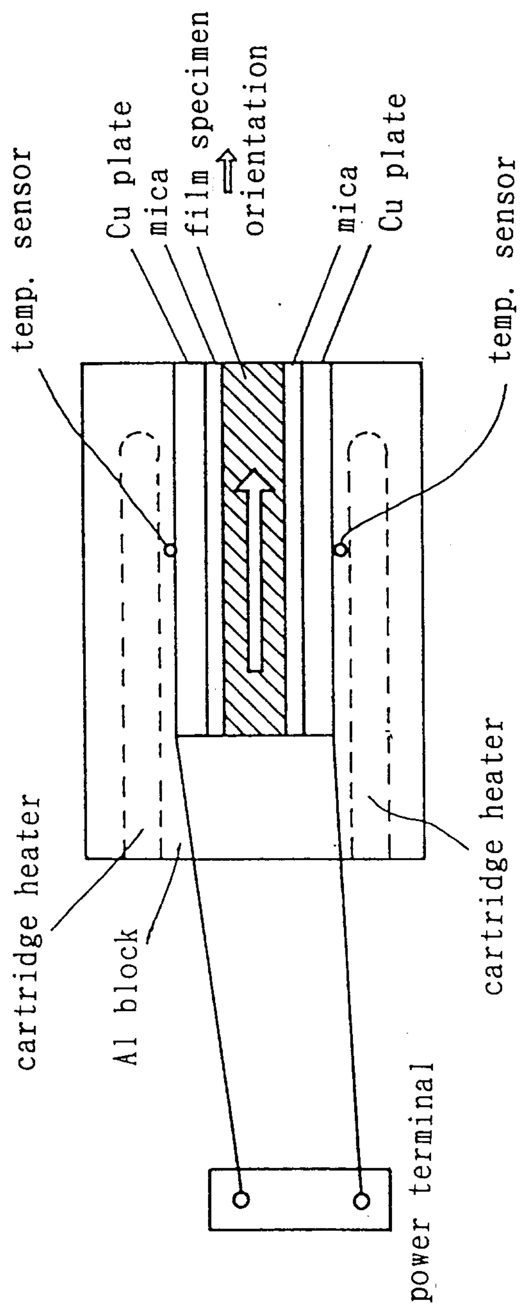
temp. sensor
Cu plate
mica
film specimen
orientation
mica
Cu plate
temp. sensor
cartridge heater
Al block
cartridge heater
power terminal

Fig. 11

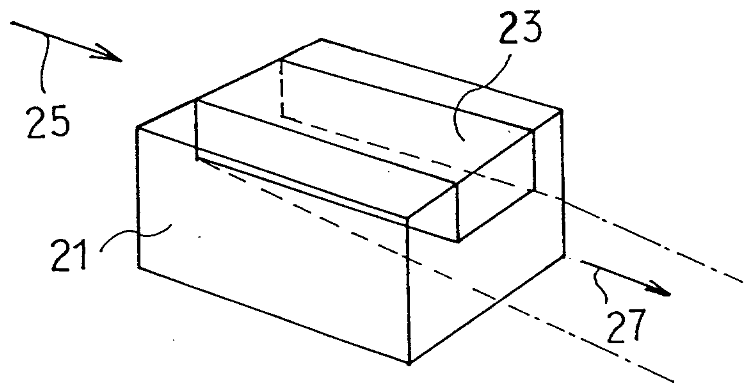

Fig. 12

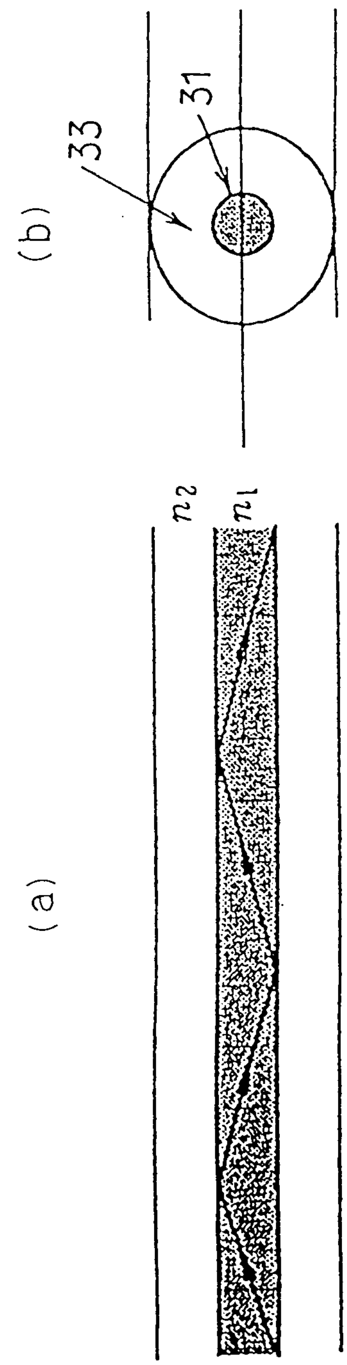

F i g. 1 3

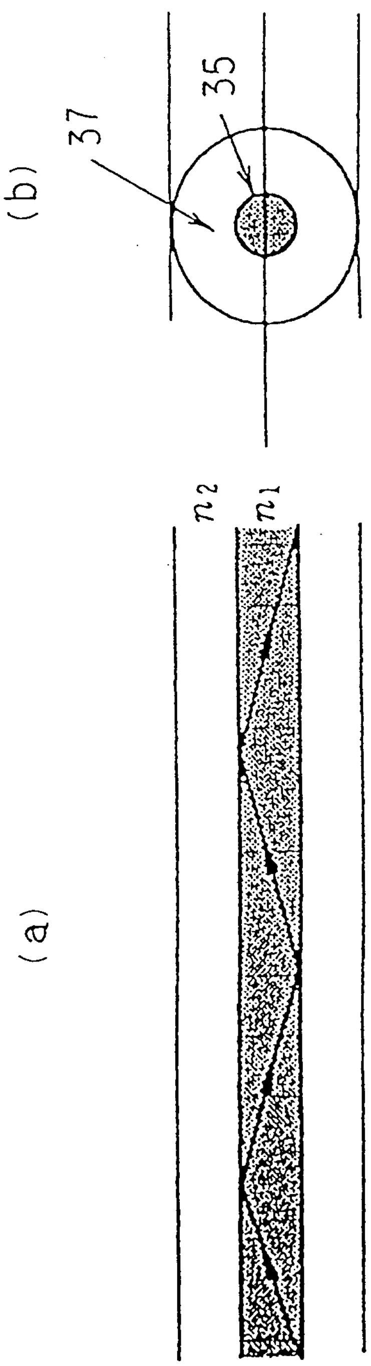

Fig. 14

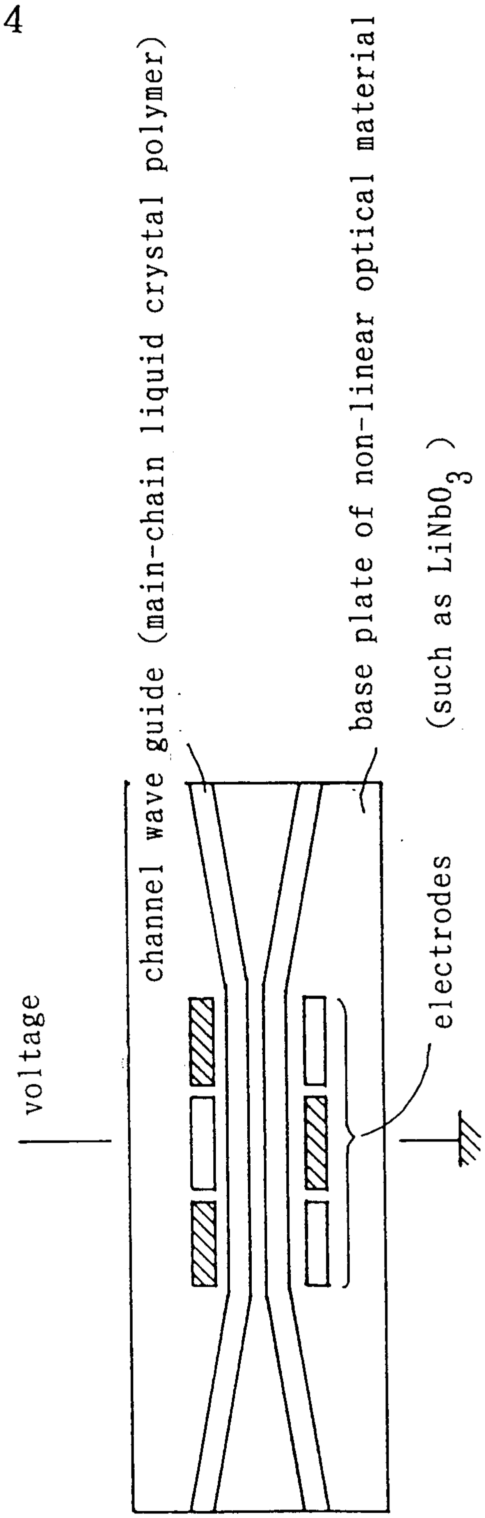
channel wave guide (main-chain liquid crystal polymer)
base plate of non-linear optical material
(such as $LiNbO_3$ )
electrodes
voltage

Fig. 15

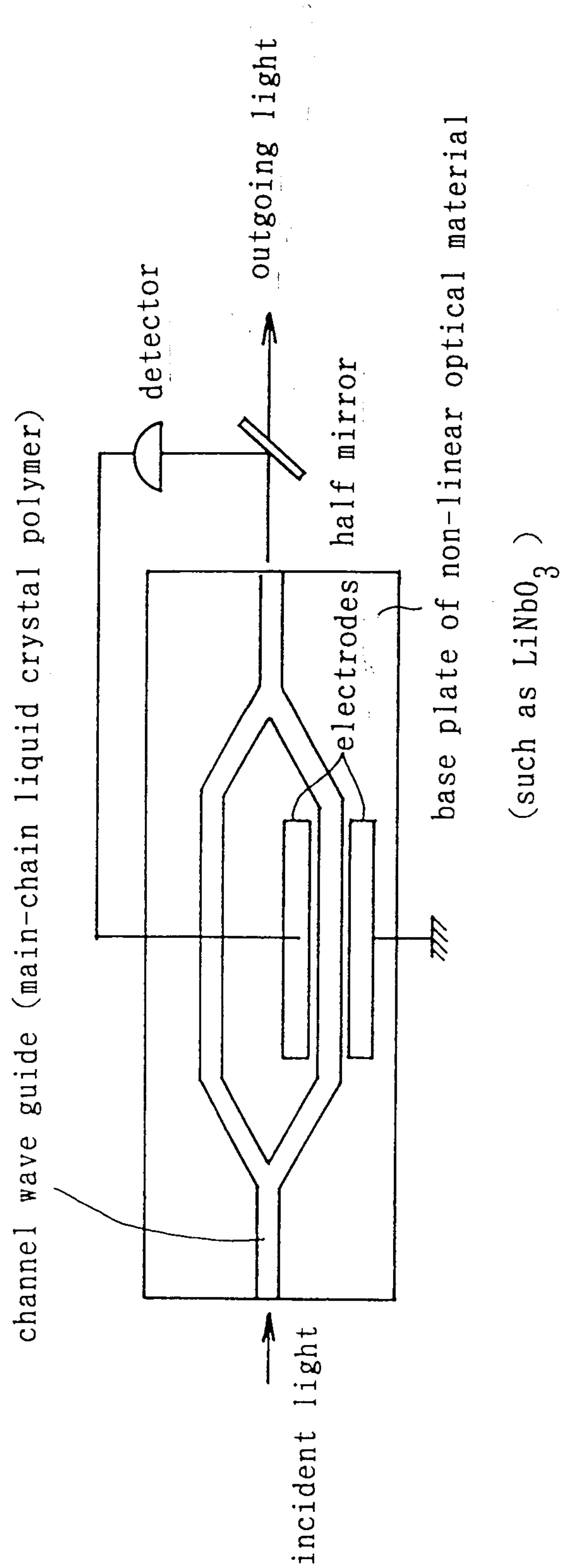
outgoing light
detector
half mirror
channel wave guide (main-chain liquid crystal polymer)
electrodes
base plate of non-linear optical material
(such as $LiNbO_3$ )
incident light

## INTERNATIONAL SEARCH REPORT

International application No.
PCT/JP92/01095

**A. CLASSIFICATION OF SUBJECT MATTER**

Int. $Cl^5$ G02F1/35

According to International Patent Classification (IPC) or to both national classification and IPC

**B. FIELDS SEARCHED**

Minimum documentation searched (classification system followed by classification symbols)

Int. $Cl^5$ G02F1/35

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, A, 62-238538 (Nippon Telegraph & Telephone Corp.), October 19, 1987 (19. 10. 87), (Lower right column, page 2 and example 1), (Family: none) | 1-4 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| December 4, 1992 (04. 12. 92) | December 22, 1992 (22. 12. 92) |
| Name and mailing address of the ISA/ Japanese Patent Office | Authorized officer |
| Facsimile No. | Telephone No. |